# EUROPÄISCHE PATENTSCHRIFT

(11) **EP 1 166 577 B1**
(45) Veröffentlichungstag und Bekanntmachung des Hinweises auf die Patenterteilung: **18.06.2003**
(21) Anmeldenummer: 99908730.7
(22) Anmeldetag: 26.03.1999
(51) Int. Cl.: H04Q 7/32

(54) **CHIPKARTE MIT INTEGRIERTEM ZEITBESTIMMUNGSSYSTEM**
CHIP CARD WITH INTEGRATED TIME DETERMINATION SYSTEM
CARTE A PUCE A SYSTEME DE DETERMINATION DE TEMPS INTEGRE

(43) Veröffentlichungstag der Anmeldung: 02.01.2002
(60) Teilanmeldung: 03003074.6
(73) Patentinhaber: Swisscom Mobile AG, 3050 Bern (CH)
(72) Erfinder: RITTER, Rudolf, CH-3052 Zollikofen (CH)
(74) Vertreter: Saam, Christophe
(86) Internationale Anmeldenummer: CH9900129
(87) Internationale Veröffentlichungsnummer: WO00059243

(56) Entgegenhaltungen:
- EP-A- 0 902 552
- WO-A-97/40616
- US-A- 5 546 445

## Beschreibung

Die vorliegende Erfindung betrifft eine Chipkarte mit einem integrierten Zeitbestimmungssystem. Die vorliegende Erfindung betrifft auch eine Chipkarte, zum Beispiel eine SIM-Karte, mit einem integrierten Zeitbestimmungssystem. Die Erfindung betrifft ausserdem ein Verrechnungsverfahren, das mit einer entsprechenden Chipkarte ausgeführt werden kann.

In Telekommunikationsnetzwerken, zum Beispiel in Telekommunikationsnetzwerken nach dem GSM-Standard, hängt die zu verrechnende Verbindungsgebühr von verschiedenen Parametern ab, unter anderem von der Dauer der Verbindung, von der Tageszeit und vom geographischen Standort des anrufenden und des angerufenen Benutzers. Diese Parameter werden meistens in der Infrastruktur des Netzes, zum Beispiel in einer Billingszentrale, ermittelt. Aus diesen Parametern wird dann die Verbindungsgebühr ermittelt und dem Konto des Benutzers beim Netzbetreiber oder bei einem Finanzinstitut belastet. Dieses Verrechnungsverfahren ist extrem aufwendig und teuer für den Netzbetreiber und verlangt ein komplexes Verrechnungssystem und viele manuelle oder halbautomatische Operationen.

Das Patentdokument EP656733 beschreibt ein Verrechnungssystem für Mobilgeräte, in welchem alle Verbindungsparameter, die zur Ermittlung der verrechneten Gebühr nötig sind, im Speicher des Mobilgeräts gespeichert sind. Dieser Betrag kann dann auf der Anzeige des Mobilgeräts zur Information angezeigt werden. Es ist jedoch in diesem Dokument nicht beschrieben, wie die ermittelte Gebühr automatisch verrechnet werden kann. Ausserdem werden die Verbindungsdauer und die Verbindungszeit mit Hilfe der internen Uhr des Mobilgeräts ermittelt. Der Netzbetreiber hat keinen Einfluss auf die Genauigkeit der Uhr in von anderen Herstellern angebotenen Mobilgeräten. Diese Uhr kann in den meisten Mobilgeräten von den Benutzern eingestellt werden, so dass ein Missbrauch durch Einstellung der Uhr auf eine günstigere Tarifperiode leicht möglich ist.

Das Patentdokument FR2680261 beschreibt eine Telefon-Chipkarte, die ein Prepaid-Konto sowie Tariftabellen enthält. Die verrechneten Gebühren für die Verbindungen werden aus dem Prepaid-Konto in Abhängigkeit von der Verbindungsdauer und der gespeicherten Tarife ermittelt. Die Zeit und die Dauer der Verbindungen werden ebenfalls in einer externen Vorrichtung ermittelt.

Die Patentanmeldung PCT/CH97/00472 beschreibt ein Verrechnungsverfahren, um einem mit einer Identifizierungskarte identifizierten Teilnehmer in einem Telekommunikationsnetz einen Anruf zu verrechnen. In diesem Verrechnungsverfahren wird die Dauer des Anrufs durch einen in der Identifizierungskarte integrierten Quarzoszillator gemessen. Der verrechnete Betrag wird dann in Abhängigkeit von der ermittelten Anrufdauer und von mindestens einer in der Identifizierungskarte gespeicherten Tariftabelle ausgewertet.

Dadurch können die wichtigsten für die Auswertung des verrechneten Betrags benötigten Parameter direkt auf der Karte ermittelt werden, so dass die Verrechnung direkt an der Quelle beim Teilnehmer erfolgen kann. Der ermittelte Betrag kann dann entweder direkt auf einem Prepaid-Konto auf der Identifizierungskarte abgebucht werden und/oder in einem Billingbeleg verpackt und an einen Belastungsserver im Telekommunikationsnetz übermittelt werden.

Chipkarten mit einem integrierten Quarzoszillator sind jedoch schwierig herzustellen und haben eine kurze Lebensdauer, so dass sie auch teuer sind. Ausserdem erlauben die in dieser Anmeldung beschriebenen Chipkarten nur die Ermittlung der Gesprächszeit und-dauer, jedoch nicht des Standorts der anrufenden Teilnehmer.

WO97/40616 beschreibt eine andere SIM-Karte mit einem Prepaid-Konto sowie einer Uhr zur Ermittlung der Dauer eines Anrufs. In einer Variante kann das Prepaid-Konto auch mit Impulsen aus dem Netz abgebucht werden. Die Uhr wird von einer Stromquelle ausserhalb der Chipkarte gespiesen; die Zeit kann somit verfälscht werden, indem die Chipkarte vorübergehend nicht gespeist wird.

Die Patentanmeldung CH98/00367 beschreibt eine Identifizierungskarte für Benutzer eines Mobilfunktelefons, in welcher alle Komponenten einer Zeitmessvorrichtung, ausser dem Quarz, enthalten sind. Die integrierte Zeitmessvorrichtung wird mit einem externen Taktsignal, zum Beispiel aus einem Quarz im Mobilgerät, synchronisiert. Ausserdem kann die eingestellte Zeit zu jeder Zeit von einem Zeitserver im Netz geprüft, und, falls notwendig, korrigiert werden. Verschiedene Mechanismen erlauben es auf diese Weise, die Genauigkeit und den Gang der Zeitmessvorrichtung aus dem Zeitserver im Netz zu überprüfen,

Mit diesem Verfahren kann nicht verhindert werden, dass die Zeit zwischen zwei Korrekturen vom Benutzer verfälscht wird. Die in dieser Anmeldung beschriebene Chipkarte erlaubt es ausserdem auch nur, die Gesprächszeit und -dauer, jedoch nicht den Standort der Teilnehmer zu ermitteln.

USS'546'445 beschreibt ein Mobiltelefon mit einem integrierten GPS-Empfänger. Die Standortinformation wird an eine Vermittlungssteile gesendet und zur Bestimmung des zu verrechnenden Betrags verwendet. Dieses System ist für Prepaid-Lösungen nicht geeignet.

Es ist folglich ein Ziel der Erfindung, eine Chipkarte mit einer verbesserten integrierten Zeitmessvorrichtung vorzuschlagen.

Ein anderes Ziel ist es, eine neue Chipkarte mit einer integrierten Zeitmessvorrichtung vorzuschlagen, die für gesicherte Anwendungen, In welchen eine unverfälschbare Zeitermittlung benötigt wird, eingesetzt werden kann.

Erfindungsgemäss werden diese Ziele mit einem in dem Verfahrensanspruch 1 beschriebenen Verfahren und mit Hilfe von in den unabhängigen Vorrichtungsansprüchen 11 und 27 beschriebenen Vorrichtungen erreicht, wobei verschiedene Varianten in den abhängigen Ansprüchen beschrieben werden.

Insbesondere werden diese Ziele mit Hilfe eines Verfahrens erreicht, in welchem die Dauer der Verbindungen, oder die Dauer von anderen verrechneten Prozessen, mit einer Zeitangabe ermittelt wird, die mit einem GPS-Empfänger ermittelt wird. Der GPS-Empfänger besteht beispielsweise aus einer Antenne, einer Hochfrequenzschaltung und einer digitalen Bearbeitungsschaltung, wobei alle oder nur gewisse von diesen Komponenten in der Chipkarte integriert werden.

Dadurch können alle für die Auswertung des verrechneten Betrags benötigten Parameter direkt in der Chipkarte ermittelt werden, so dass die Verrechnung direkt an der Quelle beim Teilnehmer erfolgen kann. GPS-Signale sind sehr schwer zu fälschen, so dass das System eine hohe Sicherheit gewährleisten kann.

Die vorliegende Erfindung wird mit Hilfe der Beschreibung besser verständlich, welche als Beispiel angeführt ist und durch die Figuren dargestellt wird, wobei:
Die Figur 1 ein Blockschema mit einer Identifizierungskarte in einer ersten Ausführungsform der Erfindung und einem konventionellen Endgerät zeigt.
Die Figur 2 ein Blockschema mit einer Identifizierungskarte in einer zweiten Ausführungsform der Erfindung und einem konventionellen Endgerät zeigt.
Die Figur 3 ein Blockschema mit einer Identifizierungskarte in einer dritten Ausführungsform der Erfindung und einem Endgerät zeigt.
Die Figur 4 ein Blockschema mit einer Identifizierungskarte in einer vierten Ausführungsform der Erfindung und einem Endgerät zeigt.
Die Figur 5 ein Blockschema mit einer Identifizierungskarte in einer fünften Ausführungsform der Erfindung und einem Endgerät zeigt.
Die Figur 6 ein Blockschema mit einer Identifizierungskarte in einer sechsten Ausführungsform der Erfindung und einem konventionellen Endgerät zeigt.
Die Figur 7 ein Blockschema mit einer Identifizierungskarte in einer siebten Ausführungsform der Erfindung, einem konventionellen Endgerät und einer zusätzlichen Vorrichtung zeigt.

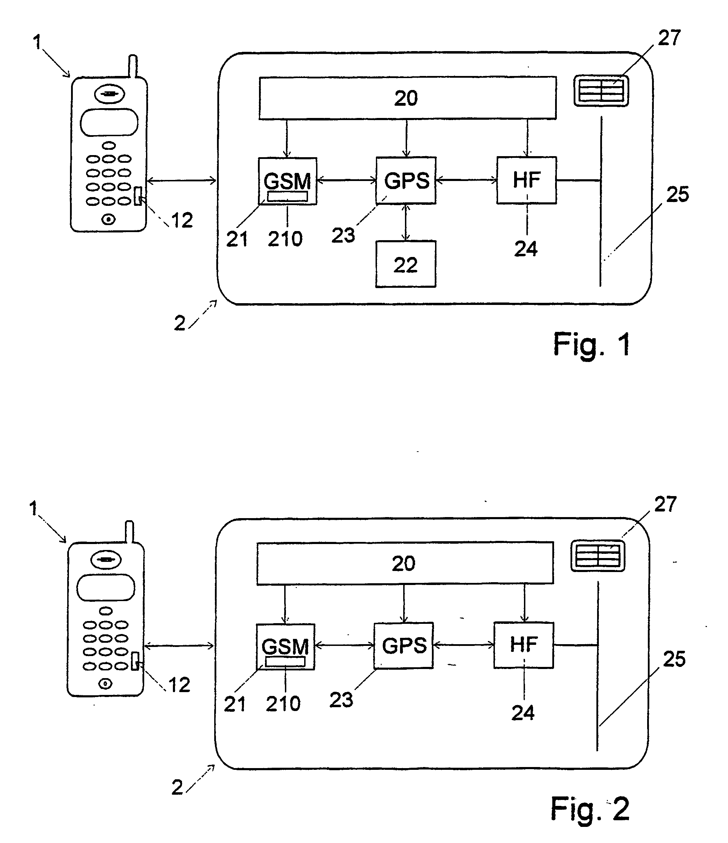

Die Figur 1 zeigt ein Blockschema eines Systems mit einem Endgerät 1 und einer Identifizierungskarte 2. Das Endgerät 1 kann beispielsweise ein digitales Mobilfunktelefon sein, zum Beispiel ein GSM oder ein UMTS-Mobilfunktelefon, oder ein Palmtop oder Laptop mit einer Kommunikationschnittstelle und einem Chipkartenleser. Das Endgerät 1 könnte aber auch ein Telekommunikationsendgerät sein, beispielsweise ein Telefon oder ein Computer, das mit einem Festnetz, beispielsweise einem öffentlichen Telefonnetz oder einem PLC-Netz (Power Line Communication) verbunden ist, in welchem die Teilnehmer mit einer persönlichen Chipkarte identifiziert werden.

Die Identifizierungskarte 2, zum Beispiel eine SIM-Karte 2 (Subscriber Identity Module), kann mit dem Endgerät verbunden sein, um den Teilnehmer in einem Telekommunikationsnetz zu identifizieren. Konventionelle SIM-Karten werden jetzt schon unter anderem in GSM-, und UMTS-Mobilgeräten eingesetzt. Die SIM-Karte ist vorzugsweise eine Full-Size-Karte (ISO); sie wird durch ein Kontaktgebiet 27 auf der Oberfläche der Karte mit dem Endgerät 1 verbunden. Andere Kartenformate und kontaktlose Karten können aber auch im Rahmen dieser Erfindung angewendet werden. Die SIM-Karte 2 enthält Datenverarbeitungsmittel 21, zum Beispiel einen bekannten GSM-SIM-Mikrokontroller. SIM-Karten sind zum Beispiel in der technischen Spezifikation GSM 11.11 und GSM 11.14 beschrieben, die seit 1995 bzw. 1996 beim Sekretariat des European Telecommunications Standards Institute, F-06921 Sophia Antipolis, erhältlich ist. Andere Identifizierungskarten, zum Beispiel Mehrzweckkarten, die unter dem Begriff Opencard bekannt sind, oder Java-Karten, können auch in dieser Erfindung eingesetzt werden.

Erfindungsgemäss enthält die SIM-Karte 2 zusätzlich einen Empfänger für Signale, die von einer Konstellation von Satelliten in einem Standort-Bestimmungssystem, beispielsweise einem GPS-System, ausgesendet werden. Der Empfänger umfasst eine Radiofrequenz-Front End Schaltung 24, einen integrierten digitalen Prozessor 23 und eine integrierte GPS-Antenne. Sowohl der digitale Prozessor 23 als auch die Front-End Schaltung 24 sind jeweils in einem Chip integriert. Die Schaltungen 23 und 24 werden beide vorzugsweise durch einen in der Karte 2 enthaltenen Energiespeicher 20 (Akkumulator oder Kondensator zum Beispiel), zumindest wenn das Endgerät 1 ausgeschaltet ist. Die Speisespannung beträgt vorzugsweise 3,3 Volts oder weniger, damit der Stromverbrauch begrenzt bleibt.

Die Front End Schaltung 24 besteht vorzugsweise aus einem ASIC, das das GPS Signal mit einer Frequenz von ca. 1,575 GHz in ein Signal mit einer niedrigeren Frequenz umwandelt, das vom digitalen Prozessor 23 bearbeitet werden kann. Die Schaltung 24 wird vorzugsweise mit bipolaren Transistoren realisiert, oder mit einer anderen schnellen Technologie. Die Front-End Schaltung kann eventuell auch einen Verstärker für das Signal aus der Antenne 25 umfassen.

Die digitale Schaltung 23 umfasst beispielsweise einen universellen Prozessor, oder vorzugsweise einen Signalprozessor (DSP), der beispielsweise mit CMOS oder mit einer anderen stromsparenden Technologie realisiert werden kann, sowie ein ROM, ein RAM und eventuell einige Korrelatoren. Mit einem an sich bekannten Programm im ROM kann der Prozessor in der Schaltung 23 die Signale aus der Schaltung 24 bearbeiten und aus diesen Signalen eine Zeitinformation und eventuell eine Standortinformation ermitteln.

Ein Oszillator 22, beispielsweise ein Quarzoszillator, ein LC-Oszillator oder ein Oszillator, der eine elektrische Frequenz aus einer Interferenz zwischen zwei optischen Frequenzen eines Lasers erzeugen kann, ist in dieser Variante auch in der Karte 2 integriert. Die vom Oszillator 22 erzeugte Frequenz wird unter anderem verwendet, um die GPS-Frequenzen zu scannen.

Die Antenne 25 ist in dieser Ausführungsform ebenfalls in der Chipkarte 2 integriert. In dieser Variante enthält die Karte sämtliche Komponenten eines GPS-Empfängers und kann die Zeit und den Standort auch ermitteln, wenn sie nicht mit dem Mobilgerät verbunden ist. Da alle Komponenten des GPS-Empfängers in der Karte 2 integriert sind, ist es ausserdem sehr schwer für einen Fälscher die eingestellte Zeit oder den Standort zu fälschen.

Die digitale Schaltung 23 ist mit einem konventionellen GSM-Prozessor 21 verbunden. Die vom GPS-Empfänger ermittelte Zeit- und Standortinformation wird dem GSM-Prozessor 21 abgegeben. Mit dieser Zeitinformation kann der Prozessor 21 die absolute Zeit und die Dauer bestimmter Prozesse in der Karte 2, beispielsweise die Dauer einer telefonischen Verbindung, ermitteln. Der GSM-Prozessor 21 umfasst ausserdem vorzugsweise Tariftabellen, mit welchen er die Telekommunikationsgebühren in Abhängigkeit der Zeit, der Dauer der Verbindung und/oder des Standorts des Teilnehmers ermitteln kann. Diese Tariftabellen werden vorzugsweise aus einem vom Netzbetreiber verwalteten Tarifserver im Netz mittels kryptographisch signierter und verschlüsselter SMS- oder USSD Meldungen ferngeladen, und werden in einem gesicherten Bereich 210 des Prozessors 21 gespeichert, so dass sie vom Benutzer nicht geändert werden können. Der Prozessor prüft, ob die empfangenen Tariftabellen tatsächlich vom einem autorisierten Netzbetreiber signiert worden sind. Die Schweizer Patentanmeldung Nr. 367/98 beschreibt andere Prozesse, um die Zeit beim Einloggen der SIM-Karte im Kommunikationsnetz einzustellen.

Auf diese Weise kann der ermittelte Betrag sofort auf der Anzeige des Mobilgeräts 21 angezeigt werden und von einem Prepaid-Konto einer vorbezahlten SIM-Karte abgebucht werden, oder in einem signierten Beleg verpackt werden und an ein Finanzdienstleistungsunternehmen (Bank oder Netzoperator) übermittelt werden. Die erfindungsgemässe Karte kann aber auch eingesetzt werden, um die Dauer von anderen Prozessen in der Karte 2 zu messen, beispielsweise die Benutzungsdauer von bestimmten Diensten oder Anwendungen oder die Benutzung von nicht für die Verkehrsabwicklung zuständigen Ressourcen.

Es ist ausserdem möglich, die erfindungsgemässe Chipkarte für andere Anwendungen als die Mobilfunktelefonie einzusetzen. Solche Chipkarten können beispielsweise auch in Pay-TV-Systemen oder in vernetzten Computern benutzt werden, beispielsweise um eine benutzungszeitabhängige Rechnung, die von der Benutzungszeit, von der Benutzungsdauer und/oder vom Standort des Benutzers abhängt, zu erstellen. Die Chipkarte 2 kann auch als Identifizierungskarte in einem Festnetz oder in einem PLC (Power Line Communication) Netz angewendet werden, in welchen die Teilnehmer mit persönlichen Chipkarten identifiziert werden.

Der Prozessor 21 kann im Rahmen dieser Erfindung auch ein an sich bekannter Java-Prozessor sein, der beispielsweise auch WAP-Module (Wireless Application Protocol) enthalten kann, um die Karte 2 mit dem Internet zu verbinden. Es ist im Rahmen dieser Erfindung auch möglich, zum Beispiel den GSM-Prozessor 21 und die digitale Schaltung 23 in einem einzigen Chip zu integrieren.

Vorzugsweise benutzt die GPS-Schaltung die vom Mobilgerät und vom Mobilfunknetz erhaltene Zeit- und Standortinformation, um sich schneller und auch bei schwierigen Empfangsbedingungen mit dem empfangenen GPS-Signal zu synchronisieren.

In einer Variante benutzt die SIM-Karte 2 die Zeit- und Standortinformation vom Mobilgerät und/oder vom Mobilfunknetz, beispielsweise von der Basisstation, wenn sie kein GPS-Signal empfangen kann, zum Beispiel im Inneren von Gebäuden. In diesem Fall wird die Zeit erst dann automatisch eingestellt, wenn die Karte eine neue Zeitinformation aus einem GPS-Satellit empfangen kann. Die Benutzung der Karte kann mit einer speziellen Anwendung automatisch gesperrt werden, wenn die Karte innerhalb einer bestimmten Zeit nicht eingestellt wurde.

Die Figur 2 zeigt ein Blockschema einer Identifizierungskarte 2 in einer zweiten Ausführungsform der Erfindung. In dieser Variante enthält die Karte 2 keinen eigenen Oszillator für das Scanning der GPS-Frequenzen, sondern benutzt zu diesem Zweck den Quarzoszillator 12, der sowieso in den meisten Mobilgeräten 1 enthalten ist. In dieser Variante kann die Karte nicht funktionieren, wenn sie nicht mit einem Mobilgerät verbunden ist. Die ermittelte Zeit kann jedoch nicht mit einer einfachen Manipulation des Mobilgeräts oder einem Ersatz des Quarzes 12 verfälscht werden, so dass diese Ausführungsform die gleiche Sicherheit wie die erste aufgeführte Ausführungsform gewährleistet.

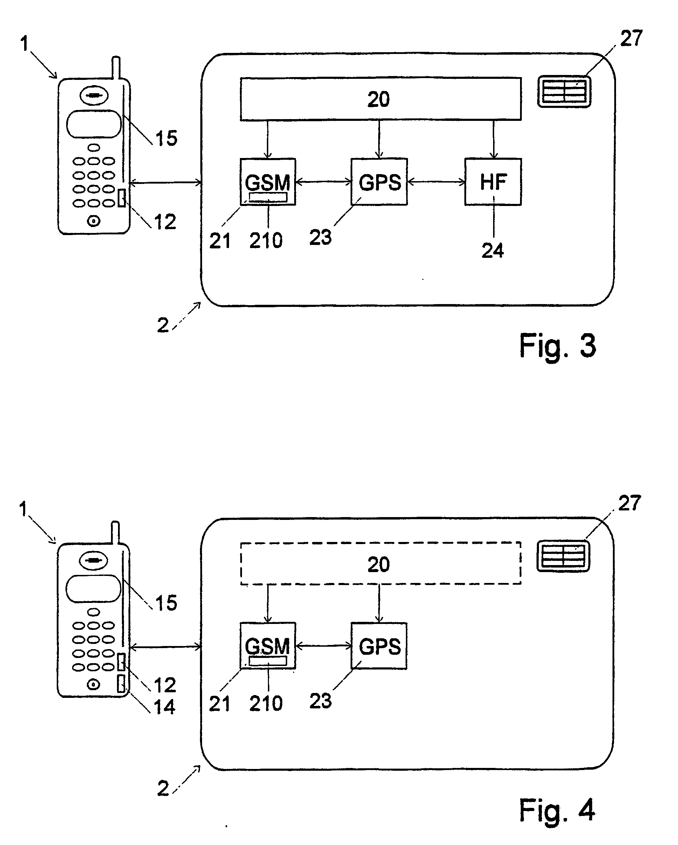

Die Figur 3 zeigt ein Blockschema einer Identifizierungskarte 2 in einer dritten Ausführungsform der Erfindung. In dieser Variante benutzt die Karte auch den Quarzoszillator 12 des Mobilgeräts. Ausserdem enthält sie keine GPS-Antenne, sondern benutzt eine im Mobilgerät 1 integrierte Antenne, wobei das empfangene Signal über das Kontakgebiet 27 an die RF-Schaltung 24 übermittelt wird. Diese Variante erlaubt es, eine bessere, grössere Antenne zu verwenden, und ausserdem die Antenne ausserhalb des Gehäuses des Mobilgeräts oder im Gehäuse der einsteckbaren Batterie zu montieren, so dass das Problem der Dämpfung des GPS-Signales im Inneren der Gehäuse gelöst wird. Allerdings kann diese Variante nur mit Mobilgeräten funktionieren, die über eine GPS-Antenne verfügen.

Die Figur 4 zeigt ein Blockschema einer Identifizierungskarte 2 in einer vierten Ausführungsform der Erfindung. In dieser Variante benutzt die Karte auch den Quarzoszillator 12 und die GPS-Antenne 15 des Mobilgeräts 1. Ausserdem benutzt sie eine Radiofrequenz-Schaltung 14, die auch im Mobilgerät 1 vorhanden ist. Die Signale zwischen der Schaltung 14 und der digitalen Schaltung 23 werden auch über das Kontaktgebiet 27 übermittelt. Da die GPS-Signale kodiert werden, ist es sehr schwierig, falsche Signale zu erzeugen, so dass diese Variante auch eine hohe Sicherheit bietet.

Da die Karte nur noch die stromsparenden Komponenten 21 und 23 umfasst, ist es auch möglich, auf die Batterie 20 zu verzichten und nur die Batterie vom Mobilgerät zu verwenden.

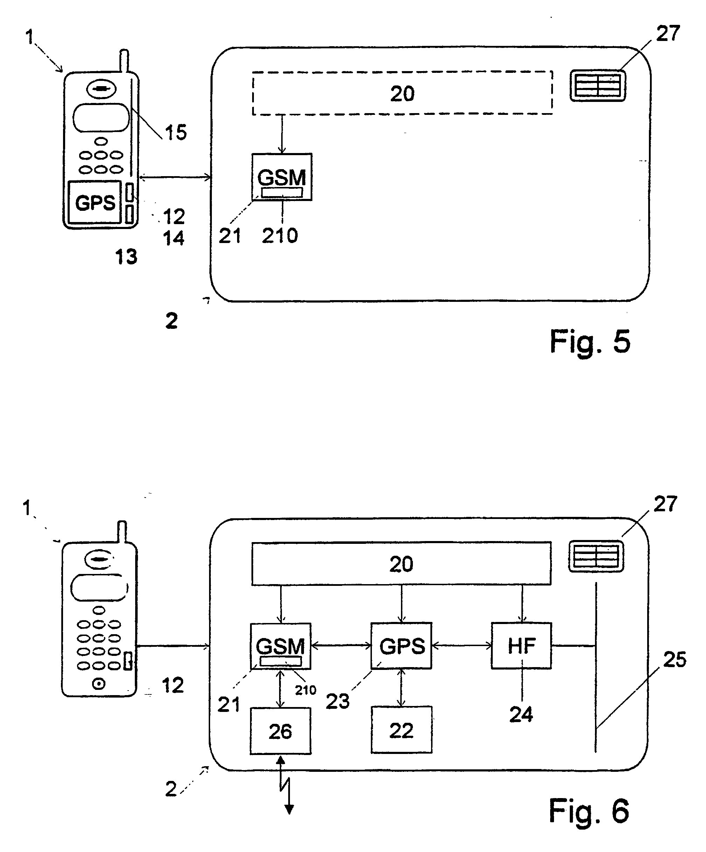

Die Figur 5 zeigt ein Blockschema einer Identifizierungskarte 2 in einer fünften Ausführungsform der Erfindung. In dieser Variante benutzt die Karte auch den Quarzoszillator 12, die GPS-Antenne 15 und die Radiofrequenzschaltung 14 des Mobilgeräts 1. Ausserdem benutzt sie mindestens gewisse Funktionen einer im Mobilgerät 1 integrierten GPSdigitalen-Schaltung, so dass die Karte nur einige sicherheitskritische GPS-Operationen durchführt. Diese Operationen können beispielsweise auch vom GSM-Prozessor 21 durchgeführt werden. In dieser Variante erhält die Karte 2 digitale und vorzugsweise elektronisch signierte und verschlüsselte Signale aus der Schaltung 13, die in einer schwer zu generierenden Form sind, und ermittelt aus diesen Signalen die Zeit- und/oder die Standortinformation.

Diese Variante bietet den Vorteil, dass sie keine Hardwareanpassungen benötigt. Sie kann beispielsweise mit einer konventionellen SIM-Karte,beispielsweise mit einer JAVA-Karte oder mit einer OpenCard-Karte, eingesetzt werden, die mit einer neuen Anwendung programmiert worden ist, mit welcher die Karte auf bestimmte Signale der Schaltung 14 zugreifen kann.

Die Figur 6 zeigt ein Blockschema einer Identifizierungskarte 2 in einer sechsten Ausführungsform der Erfindung. Diese Variante entspricht der Ausführungsform der Figur 1, ausser dass die Karte mit einer zusätzlichen kontaktlosen Schnittstelle 26 versehen ist, zum Beispiel einer elektromagnetischen Schnittstelle, wie beispielsweise in der Anmeldung PCT/CH97/00237 beschrieben, oder einer hochfrequenten Schnittstelle, zum Beispiel einer sogenannten "Bluetooth-Schnittstelle". Mit dieser Schnittstelle kann die SIM-Karte kontaktlos mit externen Geräten kommunizieren, beispielsweise um Prozesse von externen Geräten zu verrechnen.

Eine kontaktlose Schnittstelle 26 kann auch in Chipkarten gemäss einer der anderen Ausführungsformen der Figuren 2 bis 5 vorgesehen werden.

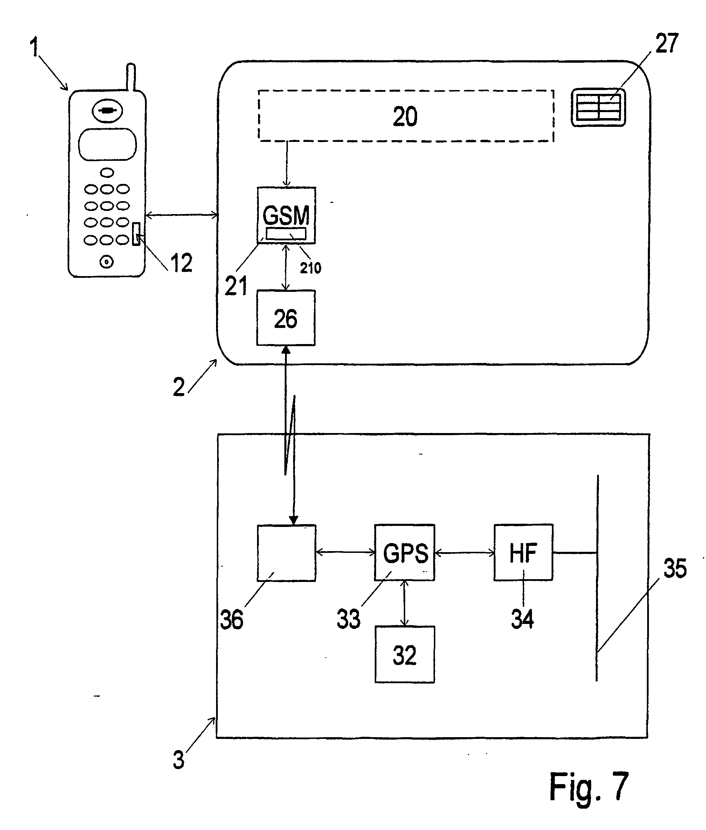

Die Figur 7 zeigt ein Blockschema eines Systems mit einer Identifizierungskarte 2 in einer siebten Ausführungsform der Erfindung. In dieser Variante umfasst die Karte einen konventionellen Prozessor 21, beispielsweise einen GSM-Prozessor oder einen mehrzweck JAVA-Prozessor, sowie eine kontaktlose Schnittstelle 26, vorzugsweise eine elektromagnetische Schnittstelle, beispielsweise eine Bluetooth-Schnittstelle. Die SIM-Karte kann sich über diese kontaktlose Schnittstelle mit einer externen Vorrichtung 3 verbinden, die über einen GPS-Empfänger verfügt. Im dargestellten Beispiel umfasst die externe Vorrichtung 3 eine kontaktlose Schnittstelle 36, beispielsweise eine RFID-Schnittstelle, die mit einer Frequenz von 135KHz, 13,65MHz, 2,45GHz oder 5,8 GHz arbeitet, oder eine Bluetooth-Schnittstelle, eine GPS-Antenne 35, eine Radiofrequenz Front-End Schaltung 34, eine digitale GPS-Schaltung 33 und einen Oszillator 32. Die externe Vorrichtung 3 verfügt ausserdem vorzugsweise über nicht dargestellte Signierungsmittel, um die mit dem GPS-Empfänger erhaltene Zeit- und Standortinformation zu signieren, in Beleger zu verpacken und um diese Belege über die Schnittstelle 36-26 an die Chipkarte 2 weiterzuleiten.

Die Chipkarte 2 kann dann diese Belege empfangen und prüfen, ob sie von einer vom Netzbetreiber zugelassenen Vorrichtung 3 signiert worden sind. In diesem Fall kann die Chipkarte mit Hilfe von Tariftabellen im gesicherten Speicherbereich 210 Prozesse auf Basis der empfangenen Zeit- und/oder Standortinformation verrechnen.

Die externe Vorrichtung kann vorzugsweise über nicht dargestellte Kommunikationsmittel verfügen, mit welchen sie digitale Daten über ein nicht dargestelltes Netz empfangen kann. Beispielsweise kann die Vorrichtung 3 über ein Modem oder über einen Router verfügen, mit welchem sie im Internet kommunizieren kann. Vorzugsweise umfasst die Vorrichtung 3 einen DAB-Empfänger (Digital Audio Broadcasting), mit welchem sie digitale Daten in Broadcast-Modus empfangen kann. Diese Daten können dann auch über die Schnittstelle 26-36 übermittelt werden. Auf diese Weise können beispielsweise aktualisierte Tariftabellen über diesen Weg in die SIM-Karte 2 übertragen werden.

## Patentansprüche

1. Verrechnungsverfahren, um einem mit einer Identifizierungskarte (2) identifizierten Teilnehmer in einem Telekommunikationsnetz einen Anruf zu verrechnen, umfassend:
Ermittlung einer Zeitinformation, die in der benannten Identifizierungskarte (2) verfügbar ist,
Auswertung des zu verrechnenden Betrags in Abhängigkeit von der benannten ermittelten Zeitinformation,
**dadurch gekennzeichnet, dass** die benannte Zeitinformation mit einem GPS-Empfänger (23,24,25; 23,24,15; 23,14,15; 13,14,15; 33,34,35) ermittelt wird.

2. Verrechnungsverfahren gemäss dem vorhergehenden Anspruch,
**dadurch gekennzeichnet, dass** die benannte Zeitinformation in der benannten Identifizierungskarte berechnet wird.

3. Verrechnungsverfahren gemäss einem der vorhergehenden Ansprüche, **dadurch gekennzeichnet, dass** die zu verrechnenden Beträge von der mit dem genannten GPS-Empfänger ermittelten Tageszeit abhängig sind.

4. Verrechnungsverfahren gemäss einem der vorhergehenden Ansprüche, **dadurch gekennzeichnet, dass** die zu verrechnenden Beträge von dem mit dem genannten GPS-Empfänger ermittelten Benutzerstandort abhängig sind.

5. Verrechnungsverfahren gemäss einem der vorhergehenden Ansprüche, **dadurch gekennzeichnet, dass** die zu verrechnenden Beträge von der mit dem genannten GPS-Empfänger ermittelten Dauer der Anrufe abhängig sind.

6. Verrechnungsverfahren gemäss dem vorhergehenden Anspruch, **dadurch gekennzeichnet, dass** der benannte GPS-Empfänger einen in der Identifizierungskarte (2) integrierten Oszillator (22) verwendet.

7. Verrechnungsverfahren gemäss dem vorhergehenden Anspruch, **dadurch gekennzeichnet, dass** der benannte GPS-Empfänger einen in einem mit der benannten Identifizierungskarte verbundenen Mobilgerät (1) integrierten Oszillator (12) verwendet.

8. Verrechnungsverfahren gemäss Anspruch 1, **dadurch gekennzeichnet, dass** der benannte GPS-Empfänger in einer externen Vorrichtung (3) integriert ist, die über eine kontaktlose Schnittstelle (26-36) mit der benannten Identifizierungskarte (2) verbunden ist.

9. Verrechnungsverfahren gemäss dem vorhergehenden Anspruch, **dadurch gekennzeichnet, dass** die benannte externe Vorrichtung (3) über eine elektromagnetische Schnittstelle (26-36) mit der benannten Identifizierungskarte (2) verbunden ist.

10. Verrechnungsverfahren gemäss dem vorhergehenden Anspruch, **dadurch gekennzeichnet, dass** die benannte externe Vorrichtung (3) elektronisch signierte Zeitbelege an die benannte Identifizierungskarte (2) übermittelt,
und dass die benannte Identifizierungskarte (2) prüft, ob die empfangenen Zeitbelege von einer zugelassenen externen Vorrichtung (3) signiert worden sind.

11. Chipkarte (2) mit mindestens einem Prozessor (21,23), welcher die Speicherung von Daten ermöglicht, die mindestens Teilnehmeridentifikationsdaten enthalten,
**dadurch gekennzeichnet, dass** der benannte Prozessor (21,23) digitale Signale, die von einem Standortbestimmung-Satellitsystem ausgesendet werden, dekodieren kann, um eine Zeitinformation zu ermitteln.

12. Chipkarte gemäss dem vorhergehenden Anspruch, **dadurch gekennzeichnet, dass** der benannte Prozessor (21,23) eine digitale Bearbeitungschaltung (23) umfasst, mit welcher die benannten Signale dekodiert werden können, sowie einen Prozessor (21), in welchem die benannten Teitnehmeridentifikationsdaten gespeichert sind.

13. Chipkarte gemäss dem vorhergehenden Anspruch, **dadurch gekennzeichnet, dass** die benannte digitale Bearbeitungschaltung (23) in einem Schaltkreis integriert ist.

14. Chipkarte gemäss einem der Ansprüche 12 bis 13, **dadurch gekennzeichnet, dass** sie ausserdem eine integrierte Schaltung (14) enthält, mit welcher Satelliten-Standortbestimmungssignale, die mit einer Antenne (15, 25) empfangen werden, in eine Form umgewandelt werden, die von der benannten digitalen Bearbeitungsschaltung (23) bearbeitet werden kann.

15. Chipkarte gemäss einem der Ansprüche 11 bis 14, **dadurch gekennzeichnet, dass** sie ausserdem eine integrierte Antenne (25) umfasst.

16. Chipkarte gemäss einem der Ansprüche 11 bis 15, **dadurch gekennzeichnet, dass** sie ausserdem eine integrierte Batterie (20) zur Speisung der benannten digitalen Bearbeitungschaltung (23) umfasst.

17. Chipkarte gemäss einem der Ansprüche 11 bis 16, **dadurch gekennzeichnet, dass** sie ausserdem eine kontaktlose Schnittstelle (26) umfasst.

18. Chipkarte gemäss dem vorhergehenden Anspruch, **dadurch gekennzeichnet, dass** die benannte kontaktlose Schnittstelle (26) eine elektromagnetische Schnittstelle ist.

19. Chipkarte gemäss dem vorhergehenden Anspruch, **dadurch gekennzeichnet, dass** die benannte elektromagnetische Schnittstelle (26) eine Bluetooth-Schnittstelle ist.

20. Chipkarte gemäss einem der Ansprüche 11 bis 19, **dadurch gekennzeichnet, dass** die benannte Identifikationsdaten Identifikationsdaten eines Teilnehmers in einem digitalen Kommunikationsnetz sind.

21. Chipkarte gemäss dem vorhergehenden Anspruch, **dadurch gekennzeichnet, dass** die Dauer von Gesprächen im benannten Kommunikationsnetz mit der benannten Zeitinformation ermittelt wird.

22. Chipkarte gemäss einem der Ansprüche 20 bis 21, **dadurch gekennzeichnet, dass** die Dauer der Benutzung von nicht für die Verkehrsabwicklung zuständigen Ressourcen in der Identifizierungskarte (2) mit der benannten Zeitinformation ermittelt wird.

23. Chipkarte gemäss einem der Ansprüche 20 bis 22, **dadurch gekennzeichnet, dass** sie ausserdem mindestens eine Tariftabelle (210) enthält, in welcher Gebühren für die Benutzung des Kommunikationsnetzes angegeben werden.

24. Chipkarte gemäss dem vorhergehenden Anspruch, **dadurch gekennzeichnet, dass** die benannte Tariftabelle (210) aus einem Tarif-Server im benannten Telekommunikationsnetz ferngeladen und/oder verändert werden kann.

25. Chipkarte gemäss dem vorhergehenden Anspruch, **dadurch gekennzeichnet, dass** sie ausserdem elektronische Signaturprüfmittel (21) umfasst, um die elektronische Signatur von empfangenen Tariftabellen zu prüfen.

26. Chipkarte gemäss einem der Ansprüche 21 bis 25, **dadurch gekennzeichnet, dass** sie ausserdem ein Prepaid-Konto umfasst, von welchem die ermittelten Beträge abgebucht werden.

27. System, um die Dauer von Prozessen in einer Chipkarte (2) zu ermitteln, umfassend:
eine Chipkarte (2), die in einem digitalen Telekommunikationsnetz eingesetzt werden kann, um einen Teilnehmer in diesem Telekommunikationsnetz zu identifizieren,
einen Empfänger, um Signale eines Standortbestimmung-Satellits zu empfangen und um eine Zeitinformation aus diesen Signalen zu ermitteln,
**dadurch gekennzeichnet, dass** die benannte Zeitinformation in der benannten Chipkarte (2) verfügbar ist, um die Dauer von Prozessen in dieser Chipkarte zu messen.

28. System gemäss dem vorhergehenden Anspruch, **dadurch gekennzeichnet, dass** mindestens gewisse Komponenten des benannten Empfängers (23; 24; 25) in der Chipkarte (2) integriert sind.

29. System gemäss dem vorhergehenden Anspruch, **dadurch gekennzeichnet, dass** die benannte Zeitinformation in der Chipkarte (2) berechnet wird.

30. System gemäss dem vorhergehenden Anspruch, **dadurch gekennzeichnet, dass** die Chipkarte (2) eine digitale Bearbeitungsschaltung (23) umfasst, mit welcher die benannte Zeitinformation berechnet wird.

31. System gemäss dem vorhergehenden Anspruch, **dadurch gekennzeichnet, dass** die benannte digitale Bearbeitungschaltung (23) in einem Schaltkreis integriert ist.

32. System gemäss einem der Ansprüche 27 bis 31, **dadurch gekennzeichnet, dass** die Chipkarte (2) ausserdem eine integrierte Schaltung (24) enthält, mit welcher Satelliten-Standortbestimmungssignale, die mit einer Antenne (15, 25) empfangen werden, in eine Form umgewandelt werden, die von der benannten digitalen Bearbeitungsschaltung (23) bearbeitet werden kann.

33. System gemäss einem der Ansprüche 27 bis 32, **dadurch gekennzeichnet, dass** die Chipkarte (2) ausserdem eine integrierte Antenne (25) umfasst.

34. System gemäss einem der Ansprüche 27 bis 33, **dadurch gekennzeichnet, dass** die Chipkarte (2) ausserdem eine integrierte Batterie (20) zur Speisung der benannten digitalen Bearbeitungschaltung (23) umfasst.

35. System gemäss dem Anspruch 27, **dadurch gekennzeichnet, dass** die benannte Zeitinformation ausserhalb der Chipkarte (2) ermittelt wird und in diese Chipkarte übertragen wird.

36. System gemäss dem vorhergehenden Anspruch, **dadurch gekennzeichnet, dass** die benannte Zeitinformation über eine kontaktlose Schnittstelle (26-36) übertragen wird.

37. System gemäss dem vorhergehenden Anspruch, **dadurch gekennzeichnet, dass** die benannte Zeitinformation über eine elektromagnetische Schnittstelle (26-36) übertragen wird.

38. System gemäss dem vorhergehenden Anspruch, **dadurch gekennzeichnet, dass** die benannte Zeitinformation über eine Bluetooth-Schnittstelle (26-36) übertragen wird.

39. System gemäss einem der Ansprüche 27 bis 38, **dadurch gekennzeichnet, dass** ausserdem eine Standortinformation aus den benannten Signalen ermittelt wird, und dass diese Standortinformation in der benannten Chipkarte (2) verfügbar ist.

## Claims

1. Billing method for billing a call to a user identified with an identification card (2) in a telecommunication network, including:
determining a time indication that is available in said identification card (2),
computing the amount to be billed depending on said determined time indication,
**characterized in that** said time indication is determined with a GPS receiver (23,24,25; 23,24,15; 23,14,15; 13,14,15; 33,34,35).

2. Billing method according to the preceding claim, **characterized in that** said time indication is computed in said identification card.

3. Billing method according to one of the preceding claims, **characterized in that** the amounts to be billed depend on the time of day determined with said GPS receiver.

4. Billing method according to one of the preceding claims, **characterized in that** the amounts to be billed depend on the user location determined with said GPS receiver.

5. Billing method according to one of the preceding claims, **characterized in that** the amounts to be billed depend on the duration of the calls determined with said GPS receiver.

6. Billing method according to the preceding claim, **characterized in that** said GPS receiver uses an oscillator (22) integrated in the identification card (2).

7. Billing method according to the preceding claim, **characterized in that** said GPS receiver uses an oscillator (12) integrated in a mobile device (1) connected to said identification card.

8. Billing method according to claim 1, **characterized in that** said GPS is integrated in an external device (3) that is connected over a contactless interface (26-36) with said identification card (2).

9. Billing method according to the preceding claim, **characterized in that** said external device (3) is connected over an electro-magnetic interface (26-36) with said identification card (2).

10. Billing method according to the preceding claim, **characterized in that** said external device (3) transmits electronically signed time receipts to said identification card (2),
and **in that** said identification card (2) checks whether the received time receipts have been signed by an authorized external device (3).

11. Chip card (2) with at least one processor (21,23) allowing the storage of data containing at least user identification data,
**characterized in that** said processor (21,23) is able to decode digital signals sent by a location-determining satellite system to determine a time indication.

12. Chip card according to the preceding claim, **characterized in that** said processor (21,23) comprises a digital processor circuit (23) with which said signals can be decoded, as well as a processor (21) in which said user identification data is stored.

13. Chip card according to the preceding claim, **characterized in that** said digital processor circuit (23) is integrated in a chip.

14. Chip card according to one of the claims 12 to 13, **characterized in that** it further comprises an integrated circuit (14), with which the satellite location-determination signals received by an antenna (15, 25) can be transformed into a form that can be processed by said digital processor circuit (23).

15. Chip card according to one of the claims 11 to 14, **characterized in that** it further comprises an integrated antenna (25).

16. Chip card according to one of the claims 11 to 15, **characterized in that** it further comprises an integrated battery (20) to power said digital processor circuit (23).

17. Chip card according to one of the claims 11 to 16, **characterized in that** it further comprises a contactless interface (26).

18. Chip card according to the preceding claim, **characterized in that** said contactless interface (26) is an electro-magnetic interface.

19. Chip card according to the preceding claim, **characterized in that** said contactless interface (26) is a Bluetooth interface.

20. Chip card according to one of the claims 11 to 19, **characterized in that** said identification data are identification data of a user in a digital communication network.

21. Chip card according to the preceding claim, **characterized in that** the duration of calls in said communication network is determined with said time information.

22. Chip card according to one of the claims 20 to 21, **characterized in that** the duration of usage of resources not required for traffic handling is determined in the identification card (2) with said time information.

23. Chip card according to one of the claims 20 to 22, **characterized in that** it further contains at least one scale of charges (210), in which the fees for using the communication network are indicated.

24. Chip card according to the preceding claim, **characterized in that** said scale of charges (210) can be downloaded from and/or modified by a tariff server in said communication network.

25. Chip card according to the preceding claim, **characterized in that** it further comprises electronic signature means (21) for checking the electronic signature of received scales of charges.

26. Chip card according to one of the claims 21 to 25, **characterized in that** it further comprises a pre-paid account, from which the computed amounts are debited.

27. System for determining the duration of processes in a chip card (2), comprising:
a chip card (2) that can be used in a digital telecommunication network to identify a user in this telecommunication network,
a receiver to receive signals of a location-determining satellite and to determine a time indication from these signals,
**characterized in that** said time information is available in said chip card (2) for measuring the duration of processes in this chip card.

28. System according to the preceding claim, **characterized in that** at least certain components of said receiver (23; 24; 25) are integrated in the chip card (2).

29. System according to the preceding claim, **characterized in that** said time information is calculated in the chip card (2).

30. System according to the preceding claim, **characterized in that** the chip card (2) comprises a digital processor circuit (23) with which said time information is calculated.

31. System according to the preceding claim, **characterized in that** said digital processor circuit (23) is integrated in a chip.

32. System according to one of the claims 27 to 31, **characterized in that** the chip card (2) further comprises an integrated circuit (24) with which satellite location-determining signals received with an antenna can be transformed into a form that can be processed by said digital processor circuit.

33. System according to one of the claims 27 to 32, **characterized in that** the chip card (2) further comprises an integrated antenna (25).

34. System according to one of the claims 27 to 33, **characterized in that** the chip card (2) further comprises an integrated battery (20) to power said digital processor circuit (23).

35. System according to claim 27, **characterized in that** said time information is determined outside the chip card (2) and transmitted into this chip card.

36. System according to the preceding claim, **characterized in that** said time information is transmitted over a contactless interface (26-36).

37. System according to the preceding claim, **characterized in that** said time information is transmitted over an electro magnetic interface (26-36).

38. System according to the preceding claim, **characterized in that** said time information is transmitted over a Bluetooth interface (26-36).

39. System according to one of the claims 27 to 38, **characterized in that** a location indication is further determined from said signals and **in that** this location information is available in said chip card (2).

## Revendications

1. Procédé de facturation pour facturer un appel dans un réseau de télécommunication à un abonné identifié à l'aide d'une carte d'identification (2), comprenant:
Détermination d'une information temporelle disponible dans ladite carte d'identification (2),
Evaluation du montant à facturer en fonction de ladite information temporelle déterminée,
**caractérisé en ce que** ladite information temporelle est déterminée à l'aide d'un récepteur GPS (23, 24, 25; 23, 24, 15; 13, 14, 15; 33, 34, 35).

2. Procédé de facturation selon la revendication précédente,
**caractérisé en ce que** ladite information temporelle est calculée dans ladite carte d'identification.

3. Procédé de facturation selon l'une des revendications précédentes, **caractérisé en ce que** les montants à facturer dépendent de l'heure déterminée à l'aide dudit récepteur GPS.

4. Procédé de facturation selon l'une des revendications précédentes, **caractérisé en ce que** les montants à facturer dépendent de l'emplacement de l'utilisateur déterminé à l'aide dudit récepteur GPS.

5. Procédé de facturation selon l'une des revendications précédentes, **caractérisé en ce que** les montants à facturer dépendent de la durée des appels déterminés à l'aide dudit récepteur GPS.

6. Procédé de facturation selon l'une des revendications précédentes, **caractérisé en ce que** ledit récepteur GPS utilise un oscillateur (22) intégré dans ladite carte d'identification (2).

7. Procédé de facturation selon l'une des revendications précédentes, **caractérisé en ce que** ledit récepteur GPS utilise un oscillateur (12) dans un appareil mobile (1) relié à ladite carte d'identification.

8. Procédé de facturation selon la revendication 1, **caractérisé en ce que** ledit récepteur GPS est intégré dans un dispositif externe (3) relié à ladite carte d'identification (2) par une interface sans contact (26-36).

9. Procédé de facturation selon la revendication précédente, **caractérisé en ce que** ledit dispositif externe (3) est relié par une interface électromagnétique (26-36) avec ladite carte d'identification (2).

10. Procédé de facturation selon la revendication précédente, **caractérisé en ce que** ledit dispositif externe (3) transmet des certificats signés de façon électronique à ladite carte d'identification (2),
et **en ce que** ladite carte d'identification (2) vérifie si les certificats reçus sont signés par un dispositif externe autorisé.

11. Carte à puce (2) avec au moins un processeur (21, 23) permettant la mémorisation de données qui contiennent au moins des données d'identification d'abonné,
**caractérisé en ce que** ledit processeur (21, 23) peut décoder des signaux numériques envoyés par un système de satellite de détermination de position pour déterminer une information temporelle.

12. Carte à puce selon la revendication précédente, **caractérisée en ce que** ledit processeur (21,23) comprend un circuit de traitement numérique (23) avec lequel lesdits signaux peuvent être décodés, ainsi qu'un processeur (21) dans lequel lesdites données d'identification d'abonnée sont mémorisées.

13. Carte à puce selon la revendication précédente, **caractérisée en ce que** ledit circuit de traitement numérique (23) est intégré dans un circuit.

14. Carte à puce selon l'une des revendications 12 à 13, **caractérisé en ce qu'**elle comprend en outre un circuit intégré (14) avec lequel des signaux de détermination de position par satellite reçus avec une antenne (15, 25) peuvent être convertis en une forme pouvant être traitée par ledit circuit de traitement numérique (23).

15. Carte à puce selon l'une des revendications 11 à 14, **caractérisée en ce qu'**elle comprend en outre une antenne intégrée (25).

16. Carte à puce selon l'une des revendications 11 à 15, **caractérisée en ce qu'**elle comprend en outre une batterie intégrée (20) pour alimenter ledit circuit de traitement numérique (23).

17. Carte à puce:selon l'une des revendications 11 à 16, **caractérisé en ce qu'**elle comporte en outre une interface sans contact (26).

18. Carte à puce selon la revendication précédente, **caractérisé en ce que** ladite interface sans contact (26) est une interface électromagnétique.

19. Carte à puce selon la revendication précédente, **caractérisée en ce que** ladite interface sans contact (26) est une interface Bluetooth.

20. Carte à puce selon l'une des revendications 11 à 19, **caractérisée en ce que** lesdites données d'identification sont des données d'identification d'un abonné dans un réseau de communication numérique.

21. Carte à puce selon la revendication précédente, **caractérisée en ce que** la durée de communications dans ledit réseau de communication est déterminée à l'aide de ladite information temporelle.

22. Carte à puce selon l'une des revendications 20 à 21, **caractérisée en ce que** la durée de l'utilisation de ressources dont ne dépend pas la gestion de trafic est déterminée dans ladite carte à puce (2) avec ladite information temporelle.

23. Carte à puce selon l'une des revendications 20 à 22, **caractérisée en ce qu'**elle comprend en outre une table de tarifs (210) dans laquelle des taxes pour l'utilisation du réseau de communication sont indiquées.

24. Carte à puce selon la revendication précédente, **caractérisée en ce que** lesdites tables de tarifs (210) peuvent être téléchargées et/ou modifiées depuis un serveur de tarifs dans ledit réseau de télécommunication.

25. Carte à puce selon la revendication précédente, **caractérisée en ce qu'**elle comprend en outre des moyens de signature électroniques (21) pour vérifier la signature électronique de tables de tarif reçues.

26. Carte à puce selon l'une des revendications 21 à 25, **caractérisée en ce qu'**elle comporte en outre un compte à prépaiement duquel les montants déterminés sont débités.

27. Système pour déterminer la durée de processus dans une carte à puce, comprenant:
une carte à puce (2) qui peut être mise en oeuvre dans un réseau de télécommunication pour identifier un abonné dans ce réseau de télécommunication,
un récepteur pour recevoir des signaux d'un satellite-de détermination de position et déterminer une information temporelle à partir de ces signaux,
**caractérisé en ce que** ladite information temporelle est disponible dans ladite carte à puce (2) pour mesurer la durée de processus dans cette carte à puce.

28. Système selon la revendication précédente, **caractérisé en ce qu'**au moins certains composants dudit récepteur (23; 24; 25) sont intégrés dans la carte à puce.

29. Système selon la revendication précédente, **caractérisé en ce que** ladite information temporelle est calculée dans ladite carte à puce (2).

30. Système selon la revendication précédente, **caractérisée en ce que** la carte à puce (2) comprend un circuit de traitement numérique (23) avec lequel ladite information temporelle est déterminée.

31. Système selon la revendication précédente, **caractérisé en ce que** ledit circuit de traitement numérique (23) est intégré dans un circuit.

32. Système selon l'une des revendications 27 à 31, **caractérisé en ce que** la carte à puce comprend en outre un circuit intégré (24) avec lequel des signaux de détermination de position par satellite reçus avec une antenne (15, 25) sont convertis en une forme pouvant être travaillée par. ledit circuit de traitement numérique (23).

33. Système selon une des revendications 27 à 32, **caractérisé en ce que** ladite carte à puce (2) comprend en outre une antenne intégrée (25).

34. Système selon l'une des revendications 27 à 33, **caractérisée en ce que** la carte à puce (2) comprend en outre une batterie intégrée (20) pour alimenter ledit circuit de traitement numérique (23).

35. Système selon la revendication 27, **caractérisé en ce que** ladite information temporelle est déterminée hors de la carte à puce (2) et transmise à cette carte à puce.

36. Système selon la revendication précédente, **caractérisé en ce que** ladite information temporelle est transmise par une interface sans contact (26-36).

37. Système selon la revendication précédente, **caractérisé en ce que** ladite information temporelle est transmise par une interface électromagnétique.

38. Système selon la revendication précédente, **caractérisée en ce que** ladite information temporelle est transmise par une interface Bluetooth.

39. Système selon l'une des revendications 27 à 38, **caractérisé en ce que** qu'une information de position est en outre déterminée à partir des dits signaux, et **en ce que** cette information de position est disponible dans ladite carte à puce (2).
